# FASCICULE DE BREVET EUROPEEN

(11) **EP 4 363 698 B1**
(45) Date de publication et mention de la délivrance du brevet: **02.04.2025**
(21) Numéro de dépôt: 22744255.5
(22) Date de dépôt: 21.06.2022
(51) Int. Cl.: F01D 5/30, F01D 5/28

(54) **CLINQUANT DESTINÉ À ÊTRE MONTÉ SUR UN PIED D'AUBE D'UN ROTOR DE TURBOMACHINE, AUBE D'UN ROTOR DE TURBOMACHINE MOBILE AUTOUR D'UN AXE DE ROTATION, ENSEMBLE POUR ROTOR DE TURBOMACHINE ET ROTOR DE TURBOMACHINE**
ZWISCHENBLECH ZUR MONTAGE AN EINEM SCHAUFELFUSS EINES TURBOMASCHINENROTORS, LAUFSCHAUFEL EINES UM EINE ROTATIONSACHSE BEWEGBAREN TURBOMASCHINENROTORS, ANORDUNG FÜR TURBOMASCHINENROTOR UND TURBOMASCHINENROTOR
SHIM FOR MOUNTING ON A BLADE ROOT OF A URBOMACHINE ROTOR, BLADE OF A TURBOMACHINE ROTOR MOVABLE ABOUT AN AXIS OF ROTATION, ASSEMBLY FOR TURBOMACHINE ROTOR AND TURBOMACHINE ROTOR

(30) Priorité: 02.07.2021 FR 2107207
(43) Date de publication de la demande: 08.05.2024
(73) Titulaire: SAFRAN AIRCRAFT ENGINES, 75015 Paris (FR)
(72) Inventeur: DELAPORTE, Nicolas Daniel, 77550 MOISSY-CRAMAYEL (FR); MULHEIM, Pierre, Marie, 77550 MOISSY-CRAMAYEL (FR); MARTINE, Arnaud, 77550 MOISSY-CRAMAYEL (FR); GIGUET, Antoine, 77550 MOISSY-CRAMAYEL (FR); GOYON, Vincent, 77550 MOISSY-CRAMAYEL (FR)
(74) Mandataire: Cabinet Camus Lebkiri
(86) Numéro de dépôt international: PCT/FR2022/051203
(87) Numéro de publication internationale: WO 2023/275456

(56) Documents cités:
- WO-A1-2021/013280

## Description

### DOMAINE TECHNIQUE DE L'INVENTION

Le domaine technique de l'invention est celui des aubes de turbine.

La présente invention concerne un clinquant destiné à être monté sur un pied d'aube d'un rotor de turbomachine, une aube d'un rotor de turbomachine mobile autour d'un axe de rotation, un ensemble pour rotor de turbomachine, ainsi qu'un rotor de turbomachine.

### ARRIERE-PLAN TECHNOLOGIQUE DE L'INVENTION

Classiquement, une turbine axiale de turbomachine se compose d'une succession d'étages axiaux (selon l'axe de circulation des flux de gaz) disposés les uns derrière les autres. Chaque étage comporte une roue mobile à aubes formant le rotor et un distributeur aubagé formant le stator. La roue mobile est mise en rotation en vis-à-vis du distributeur correspondant.

La roue mobile est classiquement constituée d'un disque annulaire centré sur l'axe de rotation de la roue, comprenant des alvéoles et une pluralité d'aubes mobiles comprenant chacune un membre d'attache appelé dans la suite un pied d'aube dans un logement en forme d'alvéole dédiée.

Dans les zones de contact entre le pied de chaque aube mobile et l'alvéole du disque logeant ce pied, ils s'exercent plusieurs types de contraintes.

On rencontre notamment le « fretting », c'est-à-dire l'usure de contact, qui est la conséquence du frottement répétitif d'une pièce sur une autre, les forces de friction résultantes pouvant engendrer un endommagement de la matière par différents processus de fatigue. Ce phénomène est particulièrement sensible dans le cas du contact entre deux pièces par exemple métalliques ou en CMC.

Ces zones sont donc soumises à une importante tendance à l'endommagement du matériau, ainsi qu'à une usure des portées du pied d'aube qui sont les zones en contact avec la paroi de l'alvéole, voire une déformation de ces zones de contact.

De plus, le niveau des contraintes locales est très élevé du fait du coefficient de frottement à l'interface entre les parois en contact du pied de l'aube et de l'alvéole, formée d'un contact métal/métal. Dans la suite, cette interface est appelée la portée du pied de l'aube et la portée de l'alvéole.

Pour résoudre ces problèmes, on recherche notamment à renforcer la résistance à l'usure des surfaces en contact et à diminuer le coefficient de frottement.

Pour ce faire, généralement on utilise une pièce de protection qui peut être un consommable, formée d'un ou de plusieurs clinquants métalliques chaussant le pied de l'aube.

Avec ce type de solution, on parvient à diminuer le coefficient de frottement et l'on peut changer le clinquant à la place d'une aube entière.

Par exemple, le document EP2042689A1 propose de recourir à un montage avec un clinquant métallique entre un pied d'aube et un disque.

Sur les aubes de turbine, des clinquants sont placés entre les pieds d'aubes et les alvéoles des disques pour empêcher l'usure de ces pièces. Ceux-ci garantissent l'intégrité mécanique des pièces avec lesquels ils sont en contact.

Dans les clinquants de l'art antérieur, ceux-ci sont maintenus en position sur les pieds d'aubes par deux languettes pliées faisant saillie par rapport à la base du clinquant située en bas du pied d'aube.

Pendant le fonctionnement de la turbine, il a été constaté dans certaines situation de possibles déplacements axiaux des clinquants, ce qui peut endommager les languettes sensibles à la suite du pliage/dépliage de celles-ci pendant la phase de montage du clinquant. Cet endommagement peut dans certains cas entraîner une découpe et entraîner de possible désengagements axiaux des clinquants. En effet, dans ces situations une fois les languettes découpées, les clinquants peuvent alors se désengager des pieds d'aube partiellement ou totalement.

Le désengagement des clinquants ne permet plus d'assurer l'intégrité mécanique du pied d'aube et du disque de turbine. Ce désengagement axial du clinquant entraîne donc au moins une portion du pied d'aube sans protection et donc une usure prématurée du pied d'aube à la place du clinquant produite par du « fretting

Les languettes découpées peuvent en outre dans certaines situations se retrouver dans une veine d'air et endommager des aubages sensibles aux chocs situés à l'aval de la turbine.

Il est aussi connu dans le document EP1764480A1 un clinquant dont la languette est formée par deux pattes s'étendant chacune des extrémités des branches, reliées ensemble par une pièce de liaison par soudage ou rivetage ou emboitement. Une telle languette entraîne un surcoût de production et en outre même si la pièce de liaison permet d'augmenter la résistance de la languette, elle n'empêche pas la rupture d'une des pattes de la languette au niveau de l'extrémité d'une des deux branches.

Des clinquants sont aussi connus, notamment dans le document EP EP2042689A1 déposée par la demanderesse, comprenant une languette repliée vers le rotor plutôt que vers l'aube, cependant la languette est toujours susceptible de se déplier ou de se déchirer et d'entraîner l'usure d'au moins une portion de l'aube. En outre dans ce document, il existe une cale entre le clinquant et le fond de l'alvéole du disque. Le clinquant comprend donc sa base entre la cale et une surface du pied d'aube. Un verrou est monté retenu entre un rebord amont de la cale et le pied d'aube, de sorte que la languette de maintien est retenue entre le verrou et le pied d'aube, ce qui permet d'empêcher le déplacement axial du clinquant par rapport au pied d'aube.

Cependant, cette solution est difficile à mettre en place et n'est pas toujours possible pour des raisons d'encombrement et de résistance mécanique de l'aube ou du disque.

Le document WO 2021/013280 A1 constitue l'état de la technique le plus proche.

### RESUME DE L'INVENTION

L'invention offre une solution à au moins un des problèmes évoqués précédemment, en permettant aux clinquants de ne pas se désengager des pieds d'aubes et d'assurer l'intégrité mécanique du pied d'aube et du disque de turbine.

Un premier aspect de l'invention concerne un clinquant destiné à être monté sur un pied d'aube d'un rotor comprenant un axe de rotation, s'étendant longitudinalement comprenant :
- une base,
- une première branche latérale et une deuxième branche latérale reliées entre elles par la base,
au moins la première branche comprend au moins un renfoncement comprenant au moins deux plis dans deux directions différentes, remarquable en ce que le renfoncement peut coopérer avec une encoche prévue dans le pied d'aube pour assurer le maintien longitudinal du clinquant par rapport au pied d'aube au moins dans un sens longitudinal. Grâce au renfoncement dans une branche, le clinquant ne peut pas se déloger du pied d'aube suivant l'axe du disque de rotor, celui-ci joue le rôle de butée. En outre le renfoncement est plus solide qu'une languette formée par un seul pli, du fait de ses différents plis.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :

Selon un mode de réalisation, le clinquant comprend un premier bord latéral et un deuxième bord latéral s'étendant sur la base et les branches, et le renfoncement est situé entre le premier bord latéral et le deuxième bord latéral et distant de ceux-ci, formant une butée longitudinale dans les deux sens axiaux du clinquant dans le pied d'aube. En plaçant le renfoncement entre les deux bords latéraux, on permet à l'aube de ne pas se désengager suivant les deux directions axiales. Le clinquant s'étend donc longitudinalement entre les deux bords latéraux formant ses extrémités.

Selon un mode de réalisation, le clinquant comprend sur chaque branche latérale, un bord longitudinal, un bord longitudinal étant contigu au renfoncement.

Selon un exemple de ce mode de réalisation, la première branche latérale comprend une surface plane comprenant le bord longitudinal et le renfoncement s'étend de cette surface plane vers l'autre branche. Cela permet de réaliser facilement le renfoncement et une butée longitudinale sans pente.

Selon une particularité de cet exemple, la surface plane est perpendiculaire à la base. Cela permet d'avoir un renfoncement qui s'étend vers l'autre branche parallèlement à la base permettant de former une butée longitudinale et radiale sans pente.

Selon une particularité de cet exemple, le premier pli du renfoncement s'étend longitudinalement de la surface plane de la première branche latérale formant une première paroi de renforcement et le deuxième pli s'étend de la première paroi de renforcement deux parois de butée opposées pour former chacune une butée longitudinale dans au moins un sens axial du clinquant dans le pied d'aube. Ainsi le renfoncement comprend deux plis formant chacun deux surfaces s'étendant dans deux directions différentes permettant d'augmenter la solidité de ce renfoncement.

Selon une particularité de cet exemple, le deuxième pli s'étendant de la première paroi de renforcement forme en outre une deuxième paroi de renforcement perpendiculaire à la première paroi de renforcement.

Selon un mode de réalisation, le renfoncement comprend :
- deux plis longitudinaux s'étendant longitudinalement,
- deux plis de profondeur, chaque pli de profondeur s'étendant entre une extrémité du premier pli longitudinal et l'autre pli longitudinal et
- quatre plis radiaux s'étendant radialement à partir du bord longitudinal vers les extrémités des plis longitudinaux et des plis de profondeur.

Selon un exemple de ce mode de réalisation, le renfoncement comprend :
- une première paroi de renforcement délimitée entre :
   - les deux plis longitudinaux dont un des deux plis longitudinaux s"etendant longitudinalement de la surface plane de la première branche latérale et
   - chaque pli de profondeur,
- deux parois de butées opposées pour assurer chacune le maintien longitudinal du clinquant par rapport au pied d'aube au moins dans un sens longitudinal délimitée chacune entre :
   - un des deux plis de profondeur, et
   - deux des quatre plis radiaux.

Dans un mode de réalisation, le premier pli forme une surface d'appui radial.

Cela permet en outre de former un appui radial du clinquant sur une surface d'une encoche du pied d'aube pouvant ainsi permettre de diminuer un déplacement du clinquant par rapport au pied d'aube lors de la mise en rotation du rotor.

Dans un mode de réalisation, le renfoncement de la première branche fait saillie vers l'autre branche. Cela permet de former une butée dans une encoche de l'aube.

Dans un mode de réalisation, le clinquant comprend un deuxième renfoncement sur la deuxième branche. Cela permet d'augmenter la résistance à une déformation des renfoncements.

Selon un exemple de ce mode de réalisation, la deuxième branche peut être symétrique à la première branche. Cela permet de pouvoir insérer le clinquant dans les deux sens longitudinaux autour du pied d'aube.

Selon un mode de réalisation, le clinquant est flexible. La flexibilité du clinquant permet à celui-ci de se déformer. Lors de l'insertion du pied d'aube entre les deux branches, le renfoncement est en appui contre une surface du pied d'aube jusqu'à ce que le renfoncement rentre dans une encoche du pied d'aube.

Un deuxième aspect de l'invention concerne une aube d'un rotor de turbomachine mobile autour d'un axe de rotation, comprenant une plateforme interne, une pale s'étendant radialement de la plateforme et un pied d'aube s'étendant radialement de cette plateforme à l'opposé de la pale, le pied d'aube comprenant :
- une première face radiale ,
- une deuxième face radiale opposée longitudinalement à la première face radiale,
- une première face longitudinale latérale rejoignant chaque face radiale et
- une deuxième face longitudinale latérale rejoignant chaque face radiale,
- au moins un flanc sur chaque face longitudinale latérale, comprenant une portée destinée à être en appui contre une surface d'un logement du pied d'aube,
- remarquable en ce que au moins la première face longitudinale latérale possède une encoche comprenant au moins une surface de butée longitudinale s'étendant dans un plan coupant l'axe de rotation et une surface de guidage s'étendant dans une autre direction que la surface de butée longitudinale, l'encoche étant destinée à recevoir un renfoncement d'un clinquant pour assurer le maintien longitudinal du clinquant par rapport au pied d'aube au moins dans un sens longitudinal.

L'encoche permet au clinquant de ne pas se déloger du pied d'aube suivant l'axe du disque de rotor, celle-ci joue un rôle de butée avec un renfoncement du clinquant. En outre l'encoche comprend deux surfaces permettant au renfoncement d'avoir deux plis et deux surfaces de différentes orientations permettant ainsi au renfoncement d'être plus solide qu'une languette formée par un seul pli, du fait de ses différents plis.

Selon un mode de réalisation, la surface de butée longitudinale s'étendant dans un plan coupant l'axe de rotation

Selon un mode de réalisation, l'encoche est située entre chaque face radiale et distant de ceux-ci. Cela permet de bloquer le clinquant dans les deux sens longitudinaux.

Selon un mode de réalisation, le pied d'aube comprend une surface inférieure reliant les deux faces longitudinales latérales et les deux faces radiales et la surface inférieure est plus proche du flanc que de l'encoche.

Selon un exemple de ce mode de réalisation, le pied d'aube comprend une portion de base comprenant les portées et une portion restreinte s'étendant entre la plateforme interne et la portion de base, la portion restreinte ayant une largeur inférieure à la moins large partie de la portion de base, et l'encoche s'étend d'une surface plane de la première face longitudinale latérale dans la portion restreinte, formant la surface de butée longitudinale et une deuxième surface de butée longitudinale perpendiculaire à la surface inférieure et inclinée par rapport à la surface plane pour assurer le maintien longitudinal du clinquant par rapport au pied d'aube dans l'autre sens longitudinal.

Selon un exemple, la portion de base comprend les portées, cette portion de base s'évase à partir de la portion restreinte.

L'invention concerne aussi un ensemble pour rotor de turbomachine comportant :
- une aube mobile selon le deuxième aspect de l'invention décrit précédemment avec ou sans les différentes combinaisons des différents avantages décrit précédemment;
- un clinquant du premier aspect de l'invention décrit précédemment avec ou sans les différentes combinaisons des différents avantages décrit précédemment, le clinquant étant monté sur le pied d'aube telle que le renfoncement est complémentaire à l'encoche du pied d'aube et est logé dans l'encoche et est en appui axial contre au moins la surface de butée longitudinale.

L'invention concerne aussi un rotor de turbomachine comportant l'ensemble décrit précédemment et un disque de rotor comportant des alvéoles ménagées dans la périphérie externe du disque de rotor, le pied d'aube étant logé dans l'une des alvéoles.

Avantageusement, une largeur A maximum du renfoncement mesurée, dans une direction tangentielle à l'axe du disque de rotor, d'une extrémité du renfoncement à un fond du renfoncement, est supérieure à une distance B mesurée sur la même droite de l'extrémité du renfoncement au disque du rotor.

### BREVE DESCRIPTION DES FIGURES

Les figures sont présentées à titre indicatif et nullement limitatif de l'invention.
[Fig.1] est une vue en perspective d'un ensemble comprenant un pied d'aube selon un premier mode de réalisation de l'invention inséré dans un clinquant selon un mode de réalisation de l'invention.
[Fig.2] est une vue en coupe de l'ensemble de la figure 1 monté dans une alvéole d'un disque de turbine.
[Fig.3] est un agrandissement de l'ensemble de la figure 1 sur un renfoncement du clinquant dans une encoche du pied d'aube.
[Fig.4a] est une vue de face d'un ensemble comprenant un pied d'aube selon un deuxième mode de réalisation de l'invention inséré dans un clinquant selon un deuxième mode de réalisation de l'invention.
[Fig.4b] est un agrandissement de l'ensemble de la figure 4a sur un renfoncement du clinquant dans une encoche du pied d'aube.

### DESCRIPTION DETAILLEE

Sauf précision contraire, un même élément apparaissant sur des figures différentes présente une référence unique.

L'invention se rapporte à un clinquant pour un pied d'une aube mobile de turbomachine, l'aube mobile ainsi qu'à un ensemble pour rotor de turbomachine comprenant une aube mobile ayant sont pied inséré dans un tel clinquant et enfin le rotor comprenant un disque de rotor comprenant des alvéoles et au moins un pied d'aube inséré dans l'alvéole.

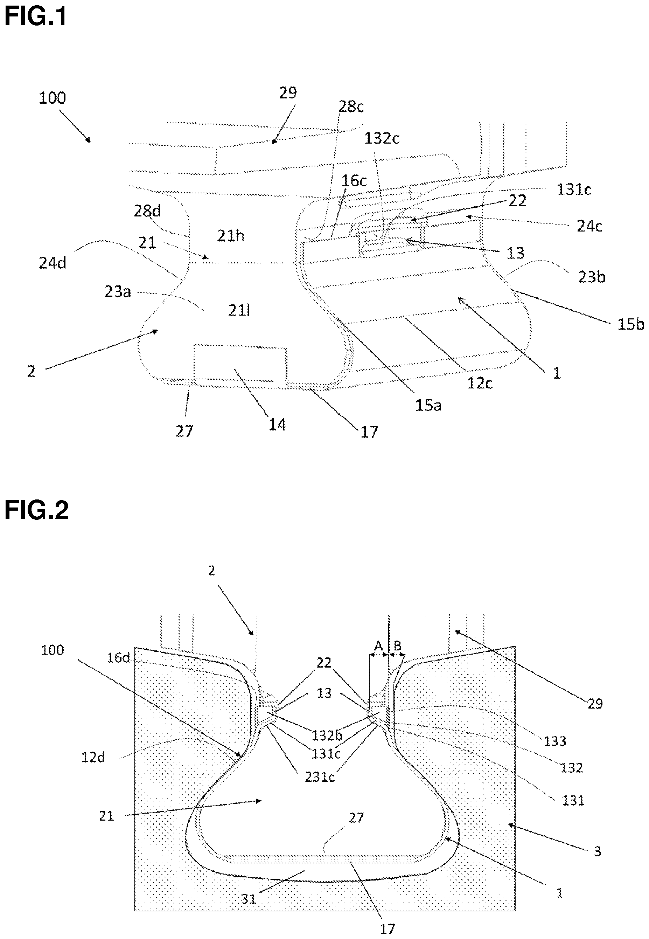

La figure 1 présente une vue en perspective d'un ensemble 100 selon l'invention comprenant un clinquant 1 et une aube 2.

La figure 2 est vue en coupe de l'ensemble 100 de la figure 1 monté dans une alvéole 31 d'un disque 3 de rotor.

L'aube 2 comprend une pale (non visible) s'étendant radialement entre une extrémité radialement externe et une extrémité radialement interne. À son extrémité radialement externe, l'aube 2 comprend un talon (non représenté). À son extrémité radialement interne, l'aube 2 comprend une plateforme interne 29 (partiellement représentée sur les figures 1 et 2) dont le pied 21 s'étend radialement vers le fond de l'alvéole 31. Le pied 21 permet de fixer l'aube 2 au disque 3 de rotor en étant retenu par des portées de l'alvéole 31 du disque 3.

Le pied 21 d'aube 2 comprend une première face radiale 23a et une deuxième face radiale 23b de part et d'autre longitudinalement du pied 21.

Le pied 21 comprend radialement une portion de base 21l comprenant les portées et une portion restreinte 21h s'étendant entre la plateforme interne 29 et la portion de base 21l. Des pointillées sur la figure 1 représente la frontière entre la portion restreinte 21h et la portion de base 21l. La portion de base 21l s'évase à partir de la portion restreinte 21h en s'élargissant pour former les portées puis s'aminci jusqu'à une surface intérieure 27 pour être en vis-à-vis du fond de l'alvéole 31 du disque 3.

Le pied 21 comprend en outre deux faces longitudinales latérales 24c, 24d de la portion de base 21l et de la portion restreinte 21h reliant chacune la première face radiale 23a et la deuxième face radiale 23b.

Chaque face longitudinale latérale 24c, 24d comprend donc dans la portion de base 21l au moins un flanc destiné à former une portée du pied 21 contre une surface de portée de l'alvéole 31.

Dans cet exemple, chaque face longitudinale latérale 24c, 24d comprend dans la portion restreinte une surface plane 28c, 28d s'étendant à partir de la portion de base 211 et dans cet exemple une surface s'évasant vers la plateforme interne.

Le clinquant 1 comprend une forme complémentaire avec le pied 21.

Un premier aspect de l'invention concerne le clinquant 1 représenté sur les figures en entourant le pied 21 de l'aube 2 de forme correspondante et un deuxième aspect de l'invention concerne l'aube 2 comprenant le pied 21. En particulier le clinquant 1 entoure la portion de base 21l du pied 21 et au moins partiellement la portion restreinte 21h du pied 21.

Le clinquant 1 comporte une base 17 recouvrant une surface inférieure 27 du pied 21 ainsi qu'une première branche latérale 12c et une deuxième branche latérale 12d visible sur la figure 2. Sur la figure 1, seule la première branche latérale 12c est visible. Les deux branches latérales 12c, 12d sont reliées l'une à l'autre par l'intermédiaire de la base 17. Les premières et deuxièmes branches latérales 12c, 12d recouvrent chacune une des deux faces longitudinales 24c, 24d correspondante du pied 21. Les branches latérales 12c, 12d forment des moyens de protection, par exemple contre le fretting, des faces longitudinales 24c, 24d du pied 21 dans une alvéole 31 du disque 3 représentés dans la figure 2.

En l'occurrence dans cet exemple, le clinquant 1 comprend sur chaque branches latérales 12c, 12d, une surface plane 18 entourant la surface plane 28c de la portion restreinte.

Le clinquant 1 comprend un premier et un deuxième bords latéraux 15a, 15b s'étendant sur une extrémité de la base 17 et des branches latérales 12c, 12d formant les extrémités longitudinales opposées du clinquant 1. Le clinquant 1 comprend aussi à l'extrémité de chacune de ses branches latérales 12c, 12d, un bord longitudinal 16c, 16d s'étendant longitudinalement le long de la surface plane 18 et reliant les deux bords latéraux 15a, 15b. Le bord longitudinal 16d de la deuxième branche latérale 12d est représenté sur la figure 2 et celui de la première branche latérale 12c est référencé sur la figure 1.

Afin de bloquer les mouvements relatifs entre le clinquant 1 et le pied 21, le pied 21 comprend au moins une encoche 22 sur une des deux faces longitudinales latérales 24c, 24d et le clinquant 1 comprend au moins un renfoncement 13 dans l'encoche 22 du pied 21, situé sur une branche latérale 12c, 12d.

Par renfoncement, on entend une forme creuse faisant saillie par rapport à une surface.

Par encoche, on entend une partie évidée dans la masse du pied 21 d'aube 2.

En l'occurrence, dans cet exemple, chaque face latérale longitudinale latérale 24c, 24d comprend une encoche 22 et le clinquant 1 comprend deux renfoncements 13, qui sont visibles sur la figure 2. En l'occurrence, chaque renfoncement 13 est situé sur le bord longitudinal 16c, 16d. Par « situé sur le bord longitudinal 16c, 16d » on entend que le renfoncement 13 comprend une portion du bord longitudinal 16c, 16d, autrement dit la déformation du renfoncement 13 a déformé le bord longitudinal 16c, 16d. Chaque encoche 22 possède une forme similaire au renfoncement 13 correspondant du clinquant 1.

En l'occurrence, la portion restreinte 21h comprend de part et d'autre les deux encoches 22 s'étendant à partir de la surface plane 28c correspondante dans la matière de la portion restreinte 21h. Par « dans la matière » on entend vers le centre de la portion restreinte.

Dans la suite, seulement le renfoncement 13 de la première branche 12c et l'encoche 22 de la première face longitudinale latérale 24c, va être décrit pour simplifier la description car dans cet exemple les branches 12c, 12d (dont les renfoncements 13) ainsi que les faces longitudinales latérales 24c, 24d (dont les encoches 22) sont en l'occurrence identiques.

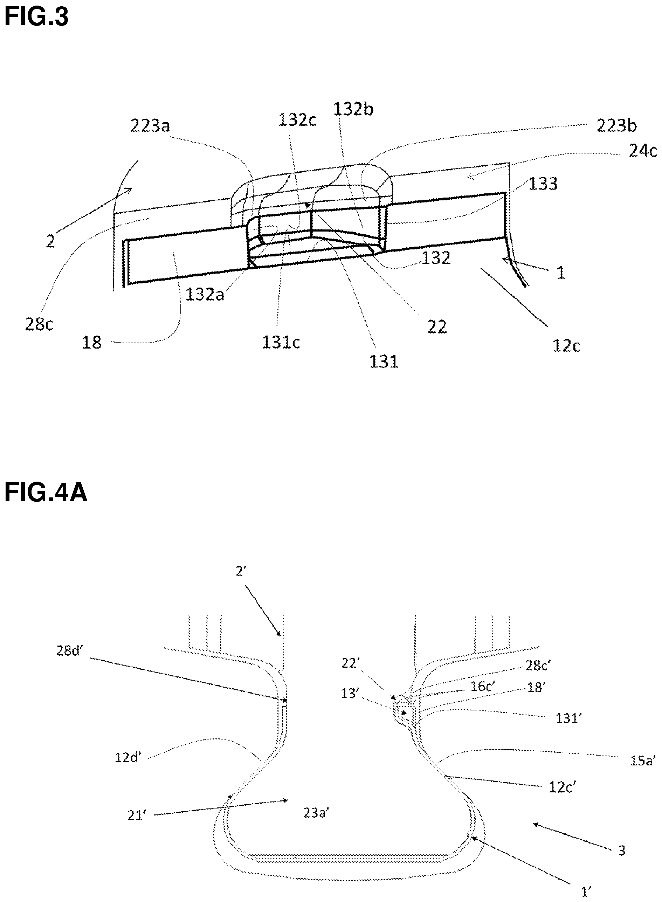

La figure 3 présente un agrandissement de la figure 1, sur un renfoncement 13 de la première branche latérale 12c du clinquant 1 dans une encoche 22 du pied 21 ayant des traits plus fins que celui du clinquant 1.

Le renfoncement 13 comprend au moins un premier pli 131 et un deuxième pli 132 de direction différente. En l'occurrence dans cet exemple, le renfoncement 13 comprend huit plis formant des arrêtes du renfoncement 13.

Dans les huit plis, le renfoncement 13 comprend :
- deux plis longitudinaux s'étendant longitudinalement, dont un est appelé dans la suite premier pli référencé 131,
- deux autres plis de profondeur, dont un est appelé deuxième pli dans la suite référencé 132, chaque pli de profondeur s'étendant entre une extrémité du premier pli longitudinal 131 et l'autre pli longitudinal et
- quatre plis radiaux s'étendant radialement à partir du bord longitudinal 16c vers les extrémités des plis longitudinaux 131 et des plis de profondeur dont un est appelé troisième pli référencé 133.

Le renfoncement 13 s'étend de la surface plane 18 vers l'autre branche 12d.

Dans cet exemple, l'encoche 22 est située entre chaque face radiale 23a, 23b et distante de celles-ci et le renfoncement 13 est donc aussi situé entre le premier bord latéral 15a et le deuxième bord latéral 15b et distant de ceux-ci.

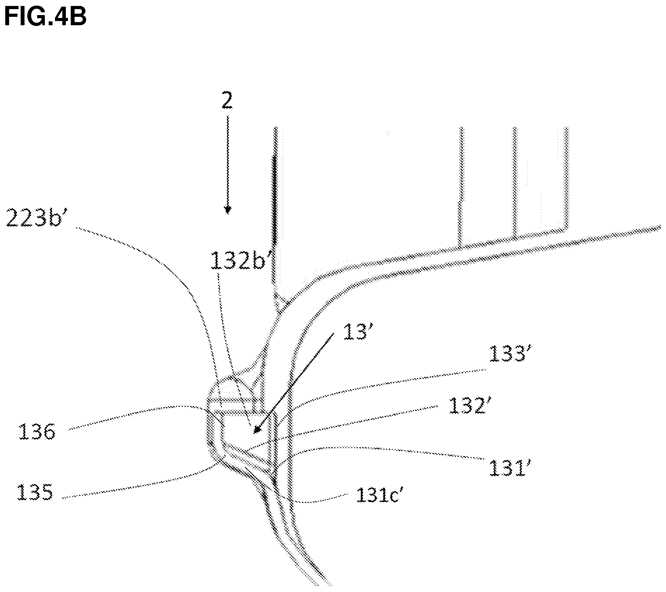

Selon un autre mode de réalisation, dont un exemple est représenté et expliqué dans la suite en figure 4a et 4b, l'encoche 22 est dans l'angle entre une des deux faces radiales 23a, 23b et une face longitudinale latérale 24c, 24d formant au moins deux surfaces distinctes et le renfoncement 13 est formé sur un bord latéral 15a, 15b comprenant au moins deux plis 131, 132 dans des orientations différentes formant au moins deux surfaces correspondantes à l'encoche 22. Par exemple, une des deux branches latérales 12c, 12d comprend un premier renfoncement 13 d'un côté d'une des deux faces radiales 23a, 23b et l'autre branche latérale 12d, 12c comprend un deuxième renfoncement 13 d'un côté de l'autre face radiale permettant ainsi de former une butée longitudinale dans les deux sens.

Dans cet exemple, le clinquant 1 est monté sur le pied 21, de telle façon que le renfoncement 13 vient épouser l'encoche 22 pour assurer le maintien axial du clinquant 1 par rapport au pied 21 d'aube 2, en l'occurrence dans les deux sens de la direction axial (ou longitudinale) du clinquant 1 par rapport au pied 21. Le renfoncement 13 et l'encoche 22 permettent de maintenir le clinquant 1 par rapport au pied 21 par le contact entre une surface de butée 223a, 223b de l'encoche 22 et une paroi de butée 132a, 132b du renfoncement 13 formée par des plis du clinquant 1 d'orientation différente.

En l'occurrence, chaque encoche 22 comprend deux surfaces de butée longitudinale 223a, 223b s'étendant dans un plan coupant l'axe de rotation et le renfoncement 13 comprend deux parois de butées 132a, 132b formées par trois plis, un des plis de profondeur 132, et deux plis radiaux 133 pour venir en contact contre la surface de butée 223a, 223b correspondante permettant ainsi de former une butée dans les deux sens axiaux du clinquant 1 dans l'encoche 22 du pied 21 d'aube 2.

Par « deux surfaces de butée longitudinale 223a, 223b s'étendant dans un plan coupant l'axe de rotation » on entend qu'elles s'étendent sensiblement perpendiculairement à la surface inférieure 27 du pied 21 mais peuvent être inclinée ou parallèles aux faces radiales 23a, 23b. Par sensiblement perpendiculaire on entend entre 70 et 110°.

Dans cet exemple, le renfoncement 13 comprend une première paroi de renforcement 131c formée entre les deux plis longitudinaux 131 et les deux plis de profondeur 132. Cette première paroi de renfoncement 131c peut permettre de former une butée radiale, contre une paroi 231c de l'encoche 22. Cette première paroi de renforcement 131c permet de renforcer les deux parois de butées 132a, 132b.

Les deux plis de profondeur 132 s'étendent donc le long de cette première paroi de renforcement 131c et s'étendent chacune le long des deux parois de butée 132a, 132b. En l'occurrence la paroi de renforcement 131c est inclinée par rapport à la surface de la base 17 mais pourrait être parallèle.

En l'occurrence, dans cet exemple le renfoncement 13 comprend une deuxième paroi de renforcement 132c s'étendant longitudinalement entre ces deux parois de butée 132a, 132b et le long de l'autre pli longitudinal. La deuxième paroi de renforcement 132c peut venir contre le fond de l'encoche 22, cependant dans cet exemple il y a un jeu entre le fond de l'encoche 22 et cette deuxième paroi de renfoncement 132c permet de renforcer les deux parois de butée 132a, 132b pour éviter qu'elles ne se plient lorsqu'elles subissent un effort axial en maintenant le clinquant 1 par rapport au pied 21.

L'encoche 22 s'étend donc de la surface plane 28c de la face longitudinale latérale 24 dans la portion restreinte 21h, formant les deux surfaces de butée longitudinale 223a, 223b qui sont dans cet exemple perpendiculaire à la surface inférieure 27 et inclinée l'une vers l'autre par rapport à la surface plane 28c pour former une butée longitudinale d'un renfoncement 13 d'un clinquant 1.

L'encoche 22 forme en outre une surface de guidage 231c en vis-à-vis de la première paroi de renfoncement 131c pour permettre de guider le renfoncement 13 dans l'encoche 22 lors de l'insertion du pied 21 dans le clinquant 1.

Avantageusement, le renfoncement 13 est obtenu par emboutissage.

Les branches latérales 12c, 12d du clinquant 1 possèdent une flexibilité élastique telle que les branches latérales 12c, 12d peuvent s'écarter ou se rapprocher. Sans contraintes sur les branches 12 celles-ci reviennent dans leurs formes initiales. Cette flexibilité permet en écartant les branches 12 d'insérer le clinquant 1 sur le pied 21 d'aube 2. Cette flexibilité est nécessaire pour insérer le clinquant 1 sur le pied 21. Lors de l'insertion du pied 21 entre les deux branches 12c, 12d latérales, chaque renfoncement 13 est en appui contre la surface plane 28c, 28d correspondante de la portion restreinte 21h du pied 21 d'aube 2, jusqu'à ce que chaque renfoncement 13 rentre dans l'encoche 22 correspondante.

Avantageusement, le clinquant 1 possède deux languettes 14 faisant saillie par rapport à la base 17 au niveau des premiers et deuxième bords latéraux 15a, 15b. Ainsi, les languettes 14 forment des butées qui sont axialement en appui contre les faces radiales 23 du pied 21 de manière à bloquer, avec chaque renfoncement 13 dans l'encoche 22 correspondante, les mouvements relatifs entre le pied 21 et le clinquant 1 et ainsi augmente la résistance du clinquant 1 contre une déformation de son renfoncement 13 ou de ses languettes 14. Selon un autre exemple, le clinquant 1 est dépourvu de ces languettes 14 ou n'en comporte qu'une seule.

Avantageusement, l'encoche 22 est obtenue par moulage ou par usinage.

La figure 2 représente une coupe radiale du clinquant 1 au niveau du renfoncement 13 et du pied 21 de l'aube mobile 2 engagé dans une alvéole 31 ménagée dans la périphérie externe du disque 3 et maintenu radialement dans l'alvéole 31 par les portées par une coopération de forme entre le pied 21 et l'alvéole 31. Avantageusement, le pied 21 de l'aube mobile 2 est en forme de queue d'aronde.

Lors de la mise en rotation du disque 3 de rotor, les aubes mobiles 2 sont soumises aux efforts centrifuges et les portées des pieds 21 viennent en butée contre des portées des alvéoles 31 du disque 3.

Afin de limiter l'usure des pieds 21, le clinquant 1 est positionné à l'interface de contact entre les pieds 21 et les alvéoles 31 du disque 3.

En référence à la figure 2, pour que le renfoncement 13 ne sorte pas de l'encoche 22 quand celui-ci est positionné dans une alvéole 31 du disque 3, une largeur A maximum du renfoncement 13 mesurée, dans une direction tangentielle à l'axe du disque 3, d'une extrémité du renfoncement 13 est supérieure à une distance B mesurée sur la même droite entre l'extrémité du renfoncement 13 et le disque du rotor 3. Autrement dit, dans cet exemple, la largeur A maximum du renfoncement 13 est mesurée entre la deuxième paroi de renforcement 132c et le premier ou deuxième pli 131, 132 au niveau de la surface plane 18 et la distance B est mesurée entre le premier ou deuxième pli 131, 132 au niveau de la surface plane 18 et une surface de l'alvéole 31. Ainsi, le renfoncement 13 ne peut se déloger de l'encoche 22 par encombrement quand le pied 21 est positionné dans une alvéole 31 du disque 3.

La figure 4a représente une vue de face de la première face radiale 23a' d'un pied 21' d'une aube 2' d'un deuxième mode de réalisation et d'un clinquant 1' selon un deuxième mode de réalisation inséré autour du pied 21'. La figure 4b représente un agrandissement de la figure 4a au niveau du renfoncement 13' et de l'encoche 22'.

Le pied 21' et le clinquant 1' de ce deuxième mode de réalisation est identique respectivement au pied 21 et au clinquant 1 du premier mode de réalisation sauf en ce qui concerne les caractéristiques suivantes :
Dans ce deuxième mode de réalisation, l'encoche 22' s'étend comme dans le premier mode de réalisation sur la surface plane 28c' de la première face longitudinale latérale 24 dans la portion restreinte 21h mais contrairement au premier mode de réalisation cette encoche 22' débouche sur la première face radiale 23a'. Bien entendu, l'encoche 22' peut s'étendre sur une longueur de la première face longitudinale latérale 24c inférieure à la moitié de la longueur totale de la première face longitudinale latérale 24c, par exemple un quart de cette longueur.

Le clinquant 1' de ce deuxième mode de réalisation, comprend donc sur la première branche latérale 12c', un renfoncement 13' dans l'encoche 22' du pied 21. Le renfoncement 13' de ce clinquant 1' selon le deuxième mode de réalisation est donc contigu au premier bord latéral 15a'. Autrement dit, le renfoncement 13' est différent du premier mode de réalisation en ce que deux pli longitudinaux 131', 135 (référencés sur la figure 4b) s'étendent chacun à partir du premier bord latéral 15a' longitudinalement formant la paroi de renfoncement 131c'.

Le renfoncement 13' comprend donc qu'une seule paroi de butée 132b'.

Le renfoncement 13' comprend donc cinq plis : deux plis longitudinaux 131', 135, deux plis radiaux 133', 136 et un seul plis de profondeur 132'.

En outre dans cet exemple de ce deuxième mode de réalisation, comme dans le premier mode de réalisation, le renfoncement 13' est contiguë au premier bord longitudinal 16c' et le renfoncement 13' s'étend de la surface plane 18' vers l'autre branche 12d'. Dans une variante de réalisation, le renfoncement 13 peut être situé sur le deuxième bord longitudinal 16d et la branche latérale 12d.

En outre dans une variante de ces exemples de ce deuxième mode de réalisation, le renfoncement 13 est toujours situé sur la première branche latérale 12c' mais distant du premier bord longitudinal 16c', le renfoncement 13 comprend alors deux autres plis longitudinaux et un autre pli de profondeur formant une autre paroi de renforcement.

Ainsi, le clinquant 1' est monté sur le pied 21', de telle façon que le renfoncement 13' représenté sur les figures 4a et 4b vient épouser l'encoche 22' pour assurer le maintien longitudinal du clinquant 1' par rapport au pied 21' dans un seul sens axial du clinquant 1' par rapport au pied 21'.

La butée entre le renfoncement 13' et l'encoche 22' est formée d'une part par une surface de butée 223b' et une paroi de butée 132b' formée par le pli de profondeur 132' et les deux plis radiaux 133', 136 du clinquant 1'.

Le clinquant 1' peut donc comprendre un autre renfoncement dans une autre encoche pour assurer le maintien longitudinal du clinquant 1' par rapport au pied 21' dans l'autre sens axial du clinquant 1 par rapport au pied 21. Par exemple la première ou/et la deuxième branche 12c,' 12d', comprend un renfoncement semblable au renfoncement 13' mais contigüe aux deuxième bord latéraux 15b et le pied comprend une deuxième encoche débouchant sur sa deuxième face radiale 23b.

Selon encore un autre exemple non représenté d'un autre mode de réalisation, la deuxième branche 12d' et la surface plane 28d' de la deuxième face longitudinale latérale sont identique à celle du premier mode de réalisation en comprenant un renfoncement 13 et une encoche comme dans le premier mode de réalisation assurant le maintien dans les deux sens longitudinaux.

## Revendications

1. Clinquant (1, 1') destiné à être monté sur un pied (21, 21') d'aube (2, 2') d'un rotor de turbomachine et comprenant :
- une base (17),
- une première branche latérale (12c, 12c') et une deuxième branche latérale (12d, 12d') reliées entre elles par la base (17),
au moins la première branche (12c, 12c') comprend au moins un renfoncement (13, 13') comprenant au moins deux plis (131, 132, 133, 131', 132', 133', 135, 136) dans deux directions différentes, **caractérisé en ce que** le renfoncement (13, 13') peut coopérer avec une encoche (22, 22') prévue dans le pied (21, 21') d'aube (2, 2') pour assurer le maintien longitudinal du clinquant (1, 1') par rapport au pied (21, 21') d'aube (2, 2') au moins dans un sens longitudinal.

2. Clinquant (1) selon la revendication précédente **caractérisé en ce qu'**il comprend un premier bord latéral (15a) et un deuxième bord latéral (15b) s'étendant sur la base (17) et les branches (12c, 12d), et **en ce que** le renfoncement (13) est situé entre le premier bord latéral (15a) et le deuxième bord latéral (15b) et distant de ceux-ci, formant une butée longitudinale dans les deux sens axiaux du clinquant (1) dans le pied (21) d'aube (2).

3. Clinquant (1, 1') selon l'une quelconque des revendications précédentes **caractérisé en ce qu'**il comprend sur chaque branche latérale (12c, 12d, 12c', 12d') un bord longitudinal (16c, 16d, 16c'), un bord longitudinal (16c, 16d, 16c') étant contigu au renfoncement (13, 13').

4. Clinquant (1, 1') selon l'une quelconque des revendications précédentes **caractérisé en ce que** la première branche latérale (12c, 12c') comprend une surface plane (18, 18') comprenant le bord longitudinal (16c, 16c') et **en ce que** le renfoncement (13, 13') s'étend de cette surface plane (18, 18') vers l'autre branche (12d, 12d').

5. Clinquant (1) selon l'une quelconque des revendications précédentes, **caractérisé en ce que** le renfoncement (13) comprend :
- deux plis longitudinaux (131) s'étendant longitudinalement,
- deux plis de profondeur (132), chaque pli de profondeur (132) s'étendant entre une extrémité du premier pli longitudinal (131) et l'autre pli longitudinal et
- quatre plis radiaux (133) s'étendant radialement à partir du bord longitudinal (16c) vers les extrémités des plis longitudinaux (131) et des plis de profondeur (132).

6. Clinquant (1) selon la revendication 5 **caractérisé en ce que** le renfoncement (13) comprend :
- une première paroi de renforcement (131c) délimitée entre :
∘ les deux plis longitudinaux (131) dont un des deux plis longitudinaux (131) s'étend longitudinalement de la surface plane (18) de la première branche latérale (12) et
o chaque pli de profondeur (132),
- deux parois de butées (132a, 132b) opposées pour assurer chacune le maintien longitudinal du clinquant (1) par rapport au pied (21) d'aube (2,) au moins dans un sens longitudinal délimitée chacune entre :
o un des deux plis de profondeur (132), et
o deux des quatre plis radiaux (133).

7. Aube (2, 2') d'un rotor de turbomachine mobile autour d'un axe de rotation, comprenant une plateforme interne (29), une pale s'étendant radialement de la plateforme interne (29) et un pied (21, 21') d'aube (2, 2') s'étendant radialement de cette plateforme interne (29) à l'opposé de la pale, le pied (21, 21') d'aube (2, 2') comprenant :
- une première face radiale (23a, 23a'),
- une deuxième face radiale (23b) opposée longitudinalement à la première face radiale (23a, 23a')
- une première face longitudinale latérale (24c) rejoignant chaque face radiale (23a, 23b, 23a')
- une deuxième face longitudinale latérale (24d) rejoignant chaque face radiale (23a, 23b, 23a'),
- au moins un flanc sur chaque face longitudinale latérale (24c, 24d), comprenant une portée destinée à être en appui contre une surface d'un logement du pied (21, 21') d'aube (2, 2'),
**caractérisée**
**en ce que** au moins la première face longitudinale latérale (24c) possède une encoche (22, 22') comprenant au moins une surface de butée longitudinale (223a, 223b, 223b') s'étendant dans un plan coupant l'axe de rotation et une surface de guidage (231c) s'étendant dans une autre direction que la surface de butée longitudinale (223a, 223b), l'encoche (22, 22') étant destinée à recevoir un renfoncement (13, 13') d'un clinquant (1) pour assurer le maintien longitudinal du clinquant (1, 1') par rapport au pied (21, 21') d'aube (2, 2') au moins dans un sens longitudinal.

8. Aube (2) selon la revendication précédente, dans lequel l'encoche (22) est située entre chaque face radiale (23a, 23b) et distante de celles-ci.

9. Aube (2) selon la revendication 8 dans lequel le pied (21) d'aube (2) comprend une portion de base (21l) comprenant les portées et une portion restreinte (21h) s'étendant entre la plateforme interne (29) et la portion de base (211), la portion restreinte (21h) ayant une largeur inférieure à la moins large partie de la portion de base (21l), l'encoche (22) s'étendant d'une surface plane (28c) de la face longitudinale latérale (24) dans la portion restreinte (21h), formant la surface de butée longitudinale (223a) et une deuxième surface de butée longitudinale (223b) perpendiculaire à la surface inférieure (27) et inclinée par rapport à la surface plane (28c) pour assurer le maintien longitudinal du clinquant (1, 1') par rapport au pied (21, 21') d'aube (2, 2') dans l'autre sens longitudinal.

10. Ensemble pour rotor de turbomachine **caractérisé en ce qu'**il comporte :
- une aube mobile (2, 2') selon l'une des revendications 7 à 9;
- un clinquant (1, 1') selon l'une des revendications 1 à 6, monté sur le pied (21, 21') d'aube (2, 2'), et **en ce que** le renfoncement (13, 13') est complémentaire à l'encoche (22, 22') du pied (21, 21') d'aube (2, 2') et est logé dans l'encoche (22, 22') et est en appui axial contre au moins la surface de butée longitudinale (223a, 223b, 223b').

11. Rotor de turbomachine comprenant l'ensemble selon la revendication précédente et un disque de rotor (3) comportant des alvéoles (31) ménagées dans la périphérie externe du disque de rotor (3), le pied (21, 21') d'aube (2, 2') étant logé dans l'une des alvéoles (31) **caractérisé en ce qu'**une largeur A maximum du renfoncement (13, 13') mesurée, dans une direction tangentielle à l'axe du disque de rotor (3), d'une extrémité du renfoncement (13, 13') à un fond du renfoncement (13, 13'), est supérieure à une distance B mesurée sur la même droite de l'extrémité du renfoncement (13, 13') au disque du rotor (3).

## Patentansprüche

1. Zwischenstück (1, 1'), das dazu bestimmt ist, an einem Fuß (21, 21') einer Schaufel (2, 2') eines Turbomaschinenrotors angebracht zu werden, und das Folgendes umfasst:
- eine Basis (17),
- einen ersten Seitenschenkel (12c, 12c') und einen zweiten Seitenschenkel (12d, 12d'), die durch die Basis (17) miteinander verbunden sind,
wobei mindestens der erste Schenkel (12c, 12c') mindestens eine Vertiefung (13, 13') mit mindestens zwei Falten (131, 132, 133, 131', 132', 133', 135, 136) in zwei verschiedenen Richtungen aufweist, **dadurch gekennzeichnet, dass** die Vertiefung (13, 13') mit einer Kerbe (22, 22') zusammenwirken kann, die in dem Fuß (21, 21') der Schaufel (2, 2') vorgesehen ist, um die Längshalterung des Zwischenstücks (1, 1') in Bezug auf den Fuß (21, 21') der Schaufel (2, 2') zumindest in einer Längsrichtung zu gewährleisten.

2. Zwischenstück (1) nach dem vorhergehenden Anspruch, **dadurch gekennzeichnet, dass** es eine erste Seitenkante (15a) und eine zweite Seitenkante (15b) umfasst, die sich über die Basis (17) und die Schenkel (12c, 12d) erstrecken, und dass die Vertiefung (13) zwischen der ersten Seitenkante (15a) und der zweiten Seitenkante (15b) liegt und von diesen beabstandet ist, wodurch ein Längsanschlag in beiden axialen Richtungen des Zwischenstücks (1) im Fuß (21) der Schaufel (2) gebildet wird.

3. Zwischenstück (1, 1') nach einem der vorhergehenden Ansprüche, **dadurch gekennzeichnet, dass** es an jedem Seitenschenkel (12c, 12d, 12c', 12d') eine Längskante (16c, 16d, 16c') aufweist, wobei eine Längskante (16c, 16d, 16c') an die Vertiefung (13, 13') angrenzt.

4. Zwischenstück (1, 1') nach einem der vorhergehenden Ansprüche, **dadurch gekennzeichnet, dass** der erste Seitenschenkel (12c, 12c') eine ebene Fläche (18, 18') umfasst, die die Längskante (16c, 16c') umfasst, und dass sich die Vertiefung (13, 13') von dieser ebenen Fläche (18, 18') zum anderen Schenkel (12d, 12d') hin erstreckt.

5. Zwischenstück (1) nach einem der vorhergehenden Ansprüche, **dadurch gekennzeichnet, dass** die Vertiefung (13) umfasst:
- zwei Längsfalten (131) 2- 1¹, die sich in Längsrichtung erstrecken,
- zwei Tiefenfalten (132), wobei sich jede Tiefenfalte (132) zwischen einem Ende der ersten Längsfalte (131) und der anderen Längsfalte erstreckt, und
- vier radiale Falten (133), die sich radial von der Längskante (16c) zu den Enden der Längsfalten (131) und der Tiefenfalten (132) erstrecken.

6. Zwischenstück (1) nach Anspruch 5, **dadurch gekennzeichnet, dass** die Vertiefung (13) umfasst:
- eine erste Verstärkungswand (131c), die begrenzt ist zwischen:
∘ den beiden Längsfalten (131), von denen sich eine der beiden Längsfalten (131) in Längsrichtung der ebenen Fläche (18) des ersten Seitenschenkels (12) erstreckt, und
o jeder Tiefenfalte (132),
- zwei gegenüberliegende Anschlagwände (132a, 132b), um jeweils den Längshalt des Zwischenstücks (1) in Bezug auf den Fuß (21) der Schaufel (2,) zumindest in einer Längsrichtung zu gewährleisten, die jeweils begrenzt sind zwischen:
o einer der beiden Tiefenfalten (132), und
o zwei der vier Radialfalten (133).

7. Schaufel (2, 2') eines Rotors einer Turbomaschine, die um eine Drehachse beweglich ist, mit einer inneren Plattform (29), einem Blatt, das sich radial von der inneren Plattform (29) erstreckt, und einem Fuß (21, 21') einer Schaufel (2, 2'), der sich radial von der inneren Plattform (29) gegenüber dem Blatt erstreckt, wobei der Fuß (21, 21') der Schaufel (2, 2') umfasst:
- eine erste radiale Fläche (23a, 23a'),
- eine zweite radiale Seite (23b), die der ersten radialen Seite (23a, 23a') in Längsrichtung gegenüberliegt
- eine erste seitliche Längsfläche (24c), die an jede radiale Fläche (23a, 23b, 23a') anschließt
- eine zweite seitliche Längsfläche (24d), die an jede radiale Fläche (23a, 23b, 23a') anschließt,
- mindestens eine Flanke an jeder seitlichen Längsseite (24c, 24d), die eine Auflagefläche umfasst, die dazu bestimmt ist, an einer Oberfläche einer Aufnahme des Fußes (21, 21') der Schaufel (2, 2') anzuliegen,
**dadurch gekennzeichnet, dass** mindestens die erste seitliche Längsfläche (24c) eine Kerbe (22, 22') aufweist, die mindestens eine Längsanschlagfläche (223a, 223b, 223b'), die sich in einer die Drehachse schneidenden Ebene erstreckt, und eine Führungsfläche (231c) umfasst, die sich in einer anderen Richtung als die Längsanschlagfläche (223a, 223b) erstreckt, wobei die Kerbe (22, 22') dazu bestimmt ist, eine Vertiefung (13, 13') eines Zwischenstücks (1) aufzunehmen, um den Längshalt des Zwischenstücks (1, 1') in Bezug auf den Fuß (21, 21') der Schaufel (2, 2') zumindest in einer Längsrichtung zu gewährleisten.

8. Schaufel (2) nach dem vorhergehenden Anspruch, bei der sich die Kerbe (22) zwischen jeder radialen Fläche (23a, 23b) befindet und von diesen beabstandet ist.

9. Schaufel (2) nach Anspruch 8, bei der der Fuß (21) der Schaufel (2) einen Basisabschnitt (211) mit den Tragflächen und einen eingeschränkten Abschnitt (21h) aufweist, der sich zwischen der inneren Plattform (29) und dem Basisabschnitt (211) erstreckt, wobei der eingeschränkte Abschnitt (21h) eine geringere Breite als der weniger breite Teil des Basisabschnitts (211) aufweist und die Kerbe (22) sich von einer ebenen Fläche (28c) der seitlichen Längsfläche (24) in den beschränkten Abschnitt (21h) erstreckt und die Längsanschlagfläche (223a) und eine zweite Längsanschlagfläche (223b) bildet, die senkrecht zur Bodenfläche (27) und schräg zur ebenen Fläche (28c) verläuft, um das Zwischenstück (1, 1') in Längsrichtung in Bezug auf den Fuß (21, 21') der Schaufel (2, 2') in der anderen Längsrichtung zu halten.

10. Baugruppe für einen Rotor einer Turbomaschine, **dadurch gekennzeichnet, dass** sie umfasst:
- eine Laufschaufel (2, 2') nach einem der Ansprüche 7 bis 9;
- ein Zwischenstück (1, 1') nach einem der Ansprüche 1 bis 6, das am Fuß (21, 21') der Schaufel (2, 2') angebracht ist, und dadurch dass die Vertiefung (13, 13') komplementär zur Kerbe (22, 22') des Fußes (21, 21') der Schaufel (2, 2') ist und in der Kerbe (22, 22') aufgenommen ist und axial gegen mindestens die Längsanschlagsfläche (223a, 223b, 223b') anliegt.

11. Rotor einer Turbomaschine mit der Baugruppe nach dem vorhergehenden Anspruch
und einer Rotorscheibe (3) mit Vertiefungen (31), die im Außenumfang der Rotorscheibe (3) ausgebildet sind, wobei der Fuß (21, 21') der Schaufel (2, 2') in einer der Vertiefungen (31) untergebracht ist, **dadurch gekennzeichnet, dass** eine in einer tangentialen Richtung zur Achse der Rotorscheibe (3) gemessene maximale Breite A der Vertiefung (13, 13') von einem Ende der Vertiefung (13, 13') zu einem Boden der Vertiefung (13, 13') größer ist als ein Abstand B, der auf der gleichen Geraden von dem Ende der Vertiefung (13, 13') zu der Rotorscheibe (3) gemessen wird.

## Claims

1. A foil (1, 1') for being mounted to a root (21, 21') of a blade (2, 2') of a turbomachine rotor and comprising:
- a base (17),
- a first side leg (12c, 12c') and a second side leg (12d, 12d') connected together through the base (17),
at least the first leg (12c, 12c') comprises at least one recess (13, 13') comprising at least two folds (131, 132, 133, 131', 132', 133', 135, 136) in two different directions, **characterised in that** the recess (13, 13') is able to cooperate with a notch (22, 22') provided in the root (21, 21') of the blade (2, 2') to ensure that the foil (1, 1') is longitudinally held relative to the root (21, 21') of the blade (2, 2') at least in one longitudinal direction.

2. The foil (1) according to the preceding claim, **characterised in that** it comprises a first side edge (15a) and a second side edge (15b) extending over the base (17) and the legs (12c, 12d), and **in that** the recess (13) is located between and distant from the first side edge (15a) and the second side edge (15b), forming a longitudinal stop in both axial directions of the foil (1) in the root (21) of the blade (2).

3. The foil (1, 1') according to any of the preceding claims, **characterised in that** it comprises on each side leg (12c, 12d, 12c', 12d') a longitudinal edge (16c, 16d, 16c'), one longitudinal edge (16c, 16d, 16c') being contiguous with the recess (13, 13').

4. The foil (1, 1') according to any of the preceding claims, **characterised in that** the first side leg (12c, 12c') comprises a planar surface (18, 18') including the longitudinal edge (16c, 16c') and **in that** the recess (13, 13') extends from that planar surface (18, 18') towards the other leg (12d, 12d').

5. The foil (1) according to any of the preceding claims, **characterised in that** the recess (13) comprises:
- two longitudinal folds (131) extending longitudinally,
- two depth folds (132), each depth fold (132) extending between one end of the first longitudinal fold (131) and the other longitudinal fold, and
- four radial folds (133) extend radially from the longitudinal edge (16c) towards the ends of the longitudinal folds (131) and the depth folds (132).

6. The foil (1) according to claim 5, **characterised in that** the recess (13) comprises:
- a first reinforcing wall (131c) delimited between:
∘ both longitudinal folds (131), one of both longitudinal folds (131) longitudinally extends from the planar surface (18) of the first side leg (12), and
∘ each depth fold (132),
- two opposite stop walls (132a, 132b) each to ensure that the foil (1) is longitudinally held relative to the root (21) of the blade (2), at least in one longitudinal direction, each delimited between:
∘ one of both depth folds (132), and
∘ two of the four radial folds (133).

7. A blade (2, 2') of a turbomachine rotor movable about an axis of rotation, comprising an inner platform (29), a vane radially extending from the inner platform (29) and a root (21, 21') of the blade (2, 2') radially extending from this inner platform (29) opposite to the vane, the root (21, 21') of the blade (2, 2') comprising:
- a first radial face (23a, 23a'),
- a second radial face (23b) opposite to the first radial face (23a, 23a') longitudinally
- a first side longitudinal face (24c) joining each radial face (23a, 23b, 23a')
- a second side longitudinal face (24d) joining each radial face (23a, 23b, 23a'),
- at least one flank on each side longitudinal face (24c, 24d), comprising a seat for bearing against a surface of a housing of the root (21, 21') of the blade (2, 2'),
- **characterised in that** at least the first side longitudinal face (24c) has a notch (22, 22') comprising at least one longitudinal stop surface (223a, 223b, 223b') extending in a plane intersecting the axis of rotation and a guide surface (231c) extending in a direction other than the longitudinal stop surface (223a, 223b), the notch (22, 22') being intended to receive a recess (13, 13') of a foil (1) to ensure that the foil (1, 1') is longitudinally held relative to the root (21, 21') of the blade (2, 2') at least in a longitudinal direction.

8. The blade (2) according to the preceding claim, wherein the notch (22) is located between and distant from each radial face (23a, 23b).

9. The blade (2) according to claim 8, wherein the root (21) of the blade (2) comprises a base portion (211) comprising the seats and a restricted portion (21h) extending between the inner platform (29) and the base portion (211), the restricted portion (21h) having a width less than the least least width of the base portion (211), and the notch (22) extending from a planar surface (28c) of the side longitudinal face (24) into the restricted portion (21h), forming the longitudinal stop surface (223a) and a second longitudinal stop surface (223b) perpendicular to the lower surface (27) and tilted with respect to the planar surface (28c) to ensure that the foil (1, 1') is longitudinally held relative to the root (21, 21') of the blade (2, 2') in the other longitudinal direction.

10. A turbomachine rotor assembly, **characterised in that** it includes:
- a moving blade (2, 2') according to one of claims 7 to 9;
- a foil (1, 1') according to one of claims 1 to 6, mounted to the root (21, 21') of the blade (2, 2'), and **in that** the recess (13, 13') is complementary to the notch (22, 22') in the root (21, 21') of the blade (2, 2') and is housed in the notch (22, 22') and axially bears against at least the longitudinal stop surface (223a, 223b, 223b').

11. A turbomachine rotor comprising the assembly according to the preceding claim and a rotor disc (3) including cells (31) formed in the outer periphery of the rotor disc (3), the root (21, 21') of the blade (2, 2') being housed in one of the cells (31), **characterised in that** a maximum width A of the recess (13, 13'), measured in a direction tangential to the axis of the rotor disc (3), from an end of the recess (13, 13') to a bottom of the recess (13, 13'), is greater than a distance B measured on the same straight line from the end of the recess (13, 13') to the rotor disc (3).
